# EUROPÄISCHE PATENTSCHRIFT

(11) **EP 2 932 207 B1**
(45) Veröffentlichungstag und Bekanntmachung des Hinweises auf die Patenterteilung: **01.11.2017**
(21) Anmeldenummer: 13795251.1
(22) Anmeldetag: 25.11.2013
(51) Int. Cl.: G01F 1/692

(54) **THERMISCHES DURCHFLUSSMESSGERÄT**
THERMAL FLOW SENSOR
DÉBITMÈTRE THERMIQUE

(30) Priorität: 14.12.2012 DE 102012112315; 23.09.2013 DE 102013110487
(43) Veröffentlichungstag der Anmeldung: 21.10.2015
(73) Patentinhaber: Endress+Hauser Flowtec AG, 4153 Reinach (BL) (CH)
(72) Erfinder: MÜLLER, Harald, 36043 Fulda (DE); PFAU, Axel, 4147 Aesch (CH); KROGMANN, Florian, 8280 Kreuzlingen (CH); SCHÖNSTEIN, Thomas, Las Vegas, NV 89130 (US)
(74) Vertreter: Andres, Angelika Maria
(86) Internationale Anmeldenummer: PCT/EP2013/074577
(87) Internationale Veröffentlichungsnummer: WO 2014/090558

(56) Entgegenhaltungen:
- WO-A1-01/20269
- DE-A1- 3 115 656
- DE-A1-102010 042 307
- US-A- 5 635 635
- US-A1- 2011 030 468

## Beschreibung

Die Erfindung betrifft ein thermisches Durchflussmessgerät nach dem Oberbegriff des Anspruchs 1, sowie ein Verfahren zur Bestimmung und/oder Überwachung eines thermischen Massedurchflusses nach dem Oberbegriff des Anspruchs 13 mit einem solchen thermischen Durchflussmessgerät.

Es sind Sensoren für Durchflussmessgeräte bekannt, welche nach dem thermischen Messprinzip arbeiten. Dieses Messprinzip beruht auf der Abkühlung eines beheizten Sensorelements, nachfolgend auch als heizendes oder aktives Sensorelement bezeichnet, dem durch das vorbeiströmende Messmedium Wärme entzogen wird. Die entzogene Energie wird durch ein Erhöhen des elektrischen Heizstroms wieder ausgeglichen. Dadurch stellt sich eine konstante Temperaturdifferenz zwischen dem heizenden Sensorelement und einem vorhandenen Referenztemperaturfühler ein, welches nachfolgend auch als messendes oder passives Sensorelement bezeichnet wird. Je grösser der Massedurchfluss ist, desto mehr Energie wird benötigt um diese Differenz zu halten. Der gemessene Heizstrom ist demzufolge proportional zum Massedurchfluss. Das thermische Messprinzip ist in der Verfahrenstechnik gut etabliert und wird in zahlreichen Anwendungen erfolgreich eingesetzt. Besonders anspruchsvoll ist die Anwendung des Messprinzips in Wasser und anderen Flüssigkeiten wie z.B. Öl, da hier die Wärmeübergänge und die benötigte Heizleistung im Vergleich zu Gasen wesentlich höher sind.

Darüber hinaus sind thermische Durchflussmesssensoren auf Basis von Dünnfilm-Elementen bekannt, wie Sie beispielsweise von der IST-AG hergestellt werden und in der DE 10 2010 042 307 beschrieben werden. Weitere Beispiele für thermische Durchflussmessgeräte sind in der US 2011/030468, der US 5 635 635 oder der WO 01/202269 beschrieben.

Es ist nunmehr die Aufgabe der vorliegenden Erfindung thermisches Durchflussmessgerät mit einem Dünnschichtsensor zu schaffen, welche ein gutes Ansprechverhalten aufweisen, also eine Temperaturänderung in möglichst kurzer Zeit detektieren und sich zum energiearmen Betreiben eignen. Darüber hinaus soll ein Verfahren zum energiearmen Betreiben des vorgenannten Durchflussmessgerätes bereitgestellt werden. Diese Aufgabe wird durch ein thermisches Durchflussmessgerät mit den Merkmalen des Anspruchs 1 gelöst. Bezüglich des Verfahrens wird die Aufgabe wird durch ein Verfahren mit den Merkmalen des Anspruchs 13 gelöst.

Erfindungsgemäß weist ein thermisches Durchflussmessgerät einen Dünnschichtsensor mit zumindest einer ersten Substratschicht aus elektrisch nicht-leitendem Material, mit einer Widerstandsschichtaus elektrisch leitendem Material und mit einer Deckschicht zum Schutz der Widerstandsschicht vor Abrasionen auf, wobei die Widerstandsschichtzwei Sensorelemente umfasst, wobei zumindest ein erstes der beiden Sensorelemente ausgebildet ist zum Einbringen einer Wärmemenge Q1 in ein Medium und zumindest ein zweites der beiden Sensorelemente ausgebildet ist zur Ermittlung der Temperatur des Mediums und der Dünnschichtsensor einen Spalt aufweist, zur Isolation der beiden Sensorelemente voneinander.

Ein besonders vorteilhafter energiearmer Betrieb des thermischen Durchflussmessgeräts wird dadurch erreicht, dass das thermische Durchflussmessgerät ein Energiespeicherelement und eine Steuer- und/oder Regeleinheit aufweist, zur getakteten Energieversorgung des ersten beheizbaren Sensorelements, derart, dass durch den Dünnschichtsensor
i) eine Wärmemenge intervallartig in das Messmedium eingebracht wird mit Intervallpausen t0 in welchen keine Wärmemenge in das Medium eingebracht wird und Heizintervallen t1 in welchen Wärmemengen in das Medium eingebracht werden, und wobei
ii) die Intervallpausen t0 länger andauern als die Heizintervalle t1.

Durch die Isolation, hier sowohl eine elektrische als auch insbesondere eine thermische Isolation der beiden Sensorelemente, wird eine schnellere Einstellung und Ermittlung eines Temperaturunterschiedes zwischen den beiden Sensorelementen erreicht.

Vorteilhafte Ausgestaltungen des Anspruchs sind Gegenstand der Unteransprüche.

Es ist von Vorteil, wenn die Deckschicht eine Schichtdicke zwischen 0,1 µm-20 µm aufweist.

Eine günstige Isolation der Sensorelemente wird erreicht, sofern der Spalt eine Spaltbreite von zumindest 3%, insbesondere zumindest 5% der Gesamtbreite des Dünnschichtsensors aufweist.

Es ist von Vorteil, wenn die Spalttiefe des Spaltes zwischen 70% und weniger als 120% der Gesamtlänge eines Sensorelements (5 oder 6), jedoch weniger als 90%, vorzugsweise weniger als 80%, der Gesamtlänge (L1) des Dünnschichtsensors, insbesondere der Gesamtlänge des Substratschicht (2), beträgt.

In die Sensorelemente können vorteilhaft Trimmschleifen aufweisen zum Trimmen des Widerstandswertes.

Es ist von Vorteil, wenn der Dünnschichtsensor eine im Wesentlichen spiegelsymmetrische Form aufweist, wobei die Spiegelebene entlang einer Mittelachse des Spaltes verläuft. Durch den symmetrischen Aufbau können unabhängig jedes der beiden Sensorelemente jeweils die Funktion des anderen Sensorelements übernehmen. Selbst bei Verwechslungen der Anschlüsse bleibt somit die Funktion gewahrt und es ist auch ein wechselseitiger Heizbetrieb möglich.

Durch die schnelle Ansprechzeit und die sehr direkte Wärme- und Temperaturübertragung des Sensors kann der Energiehaushalt des Durchflussmessgerätes optimiert und der Energieverbrauch verringert werden.

Es ist zudem von Vorteil, wenn der Dünnschichtsensor in einem Sockel, vorzugsweise einem keramischen Sockel, zur Anordnung an oder in einem Gehäuse eines thermischen Durchfilussmessgerätes, eingefasst ist. Dadurch wird die Bruchgefahr des Dünnschichtsensors beim Einsetzen in das Gehäuse verringert, da der Sockel als Befestigungsfläche zur Verfügung steht.

Es ist zudem von Vorteil, wenn zwischen dem Sockel und dem Dünnschichtsensor eine Verbindungsschicht, vorzugsweise aus Temperaturschmelzglas, angeordnet ist. Dies gewährleistet eine dauerhafte Anbindung an den Sockel.

In den Sockel sind Leitungen integriert zur Versorgung des Dünnschichtsensors mit Energie und/oder zur Signalübertragung von durch den Dünnschichtsensor gemessenen Werte. Dabei wird durch den Sockel eine Zugentlastung dieser Leitungen erreicht und eine unabsichtliche Trennung vom Dünnschichtsensor verhindert.

Um das Eindringen des Mediums in das Gehäuse des Durchflussmessgerätes und damit einen Angriff der Elektronik zu verhindern, ist zwischen dem Sockel und dem Gehäuse eine Anbindungsschicht zur dichten Verbindung zwischen dem Sockel und dem Gehäuse angeordnet.

Der Sockel kann in einer lösbaren Axialarretierung an oder in dem Gehäuse des angeordnet sein. Dies hat den Vorteil, dass der Dünnschichtsensor bei Beschädigung austauschbar ist.

Insbesondere ist das thermische Durchflussmessgerät ein Zweileiter-Messgerät.

Das Verfahren umfasst ein Verfahren zur Bestimmung und/oder Überwachung eines thermischen Massedurchflusses eines Messmediums durch ein Messrohr mit einem erfindungsgemäßen thermischen Durchflussmessgerät, wobei ein Speichern der eingespeisten Energie durch den Energiespeicher und die Abgabe eines Energiebetrags über ein Zeitfenster an das erste Sensorelement erfolgt, wobei der abgegebene Energiebetrag größer ist als der Betrag der in diesem Zeitfenster eingespeisten Energie.

Durch diese Betriebsweise kann das thermische Durchflussmessgerät mit geringer kontinuierlicher Speiseenergie betrieben werden.

Ein erfindungsgemäßes Ausführungsbeispiel wird nachfolgend anhand von Figuren näher beschrieben. Sie zeigen:
- Fig. 1: geschnittene Seitenansicht eines erfindungsgemäßen Dünnschichtsensors;
- Fig. 2: geschnittene Vorderansicht eines erfindungsgemäßen Dünnschichtsensors;
- Fig. 3: Seitenansicht eines erfindungsgemäßen thermischen Durchflussmessgerätes;
- Fig. 4: Vorderansicht eines erfindungsgemäßen thermischen Durchflussmessgerätes;
- Fig. 5: Ansicht eines erfindungsgemäßen Durchfilussmessgerätes;
- Fig. 6: Darstellung eines idealisierten Energieverlaufs über die Zeit; und
- Fig. 7: Darstellung eines Temperaturverlaufes bei gepulster Energieversorgung.

Herkömmliche thermische Durchflussmessgeräte verwenden üblicherweise zwei möglichst gleichartig ausgestaltete beheizbare Sensorelemente, die in thermischem Kontakt mit dem durch ein Messrohr oder durch die Rohrleitung strömenden Medium sind. Für die industrielle Anwendung sind beide Sensorelemente als ein Element miteinander in einem Dünnfilmelement beispielsweise in einer Kunststoffmasse integriert. Dabei ist das Dünnfilmelement maximal 2 mm dick. Eines der beiden Sensorelemente ist ein sogenanntes aktives Sensorelement, das mittels einer Heizeinheit beheizt wird. Als Heizeinheit ist entweder eine zusätzliche Widerstandsheizung vorgesehen, oder bei dem Sensorelement selbst handelt es sich um ein Widerstandselement, z. B. um einen RTD-(Resistance Temperature Device)Sensor, der durch Umsetzung einer elektrischen Leistung, z. B. durch eine entsprechende Variation des Messstroms erwärmt wird. Bei dem zweiten Sensorelement handelt es sich um ein sog. passives Sensorelement: Es misst die Temperatur des Mediums.

Üblicherweise wird in einem thermischen Durchflussmessgerät ein beheizbares Sensorelement so beheizt, dass sich eine feste Temperaturdifferenz zwischen den beiden Sensorelement einstellt. Alternativ ist es auch bekannt geworden, über eine Regel-/Steuereinheit eine konstante Heizleistung einzuspeisen.

Tritt in dem Messrohr kein Durchfluss auf, so wird eine zeitlich konstante Wärmemenge zur Aufrechterhaltung der vorgegebenen Temperaturdifferenz benötigt. Ist hingegen das zu messende Medium in Bewegung, ist die Abkühlung des beheizten Sensorelements wesentlich von dem Massedurchfluss des vorbeiströmenden Mediums abhängig. Da das Medium kälter ist als das beheizte Sensorelement, wird durch das vorbeiströmende Medium Wärme von dem beheizten Sensorelement abtransportiert. Um also bei einem strömenden Medium die feste Temperaturdifferenz zwischen den beiden Sensorelementen aufrecht zu erhalten, ist eine erhöhte Heizleistung für den beheizten Sensorelement erforderlich. Die erhöhte Heizleistung ist ein Maß für den Massedurchfluss bzw. den Massestrom des Mediums durch die Rohrleitung.

Wird hingegen eine konstante Heizleistung eingespeist, so verringert sich infolge des Durchflusses des Mediums die Temperaturdifferenz zwischen den beiden Sensorelementen. Die jeweilige Temperaturdifferenz ist dann ein Maß für den Massedurchfluss des Mediums durch die Rohrleitung bzw. durch das Messrohr.

Es besteht somit ein funktionaler Zusammenhang zwischen der zum Beheizen des Sensorelements notwendigen Heizenergie und dem Massedurchfluss durch eine Rohrleitung bzw. durch ein Messrohr. Die Abhängigkeit des Wärmeübertragungskoeffizienten von dem Massedurchfluss des Mediums durch das Messrohr bzw. durch die Rohrleitung wird in thermischen Durchflussmessgeräten zur Bestimmung des Massedurchflusses genutzt.

Bei der Temperatur des thermischen Massedurchflusses kann ein thermisches Durchflussmessgerät bei der Messung von Flüssigkeiten an eine Höchstleistungsgrenze gelangen.

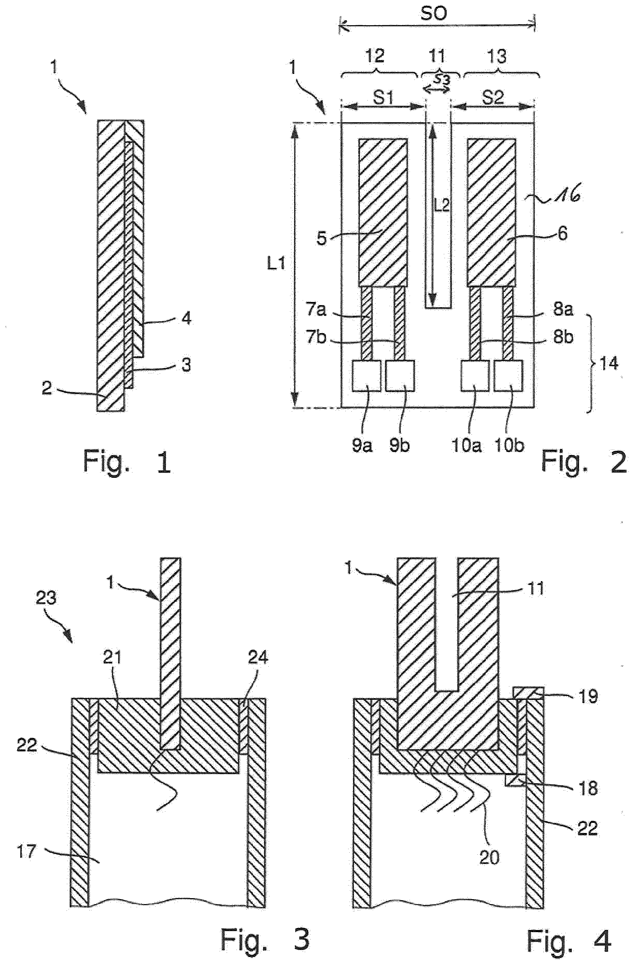

In Fig. 1 und 2 ist ein Dünnschichtsensor 1 dargestellt, wie er erfindungsgemäß in ein thermisches Durchflussmessgerät einbaubar ist.

Dieser Dünnschichtsensor 1 ist in seiner einfachsten Bauart dreischichtig aufgebaut. Ausgehend von einer beliebig dicken keramischen Substratschicht 2 wird eine Widerstandsschicht 3 aufgebracht. Eine typische Substratschichtdicke kann zwischen 250 und 800 µm betragen. Es sind allerdings auch wesentlich dickere oder dünnere Substratschichtdicken möglich. Die Substratschicht kann, aufgrund des tiefen Wärmeleitfähigkeitskoeffizienten, vorzugsweise aus Aluminiumoxid oder auch Zirkonoxid bestehen oder zumindest zu über 50 Gew.% Zirkonoxid enthalten. Die Widerstandsschicht kann aus Platin bestehen, dessen elektrischer Widerstand linear von der Temperatur abhängt. Die Besonderheit dieser Widerstandsschicht liegt in seiner Auftragsweise, welche nach dem sog. Dünnschicht-Verfahren erfolgt.

Dünnschicht- bzw. Dünnfilmsensoren sind feststehende Begriffe aus der Sensortechnik. Üblicherweise werden in einem Dünnschicht-Verfahren Schichten von atomarer Größe bis hin zu ca. 5 µm Dicke auf der Oberfläche eines Substrates abgeschieden. Dies erfolgt entweder als Abscheidung unter Vakuum oder innerhalb einer definierten Atomsphäre, z.B. innerhalb einer Schutzgasatmosphäre wie Argon. Das abzuscheidene Medium, hier beispielsweise Platin, wird dabei typischerweise zerstäubt, verdampft oder chemisch durch Reaktion mit anderen Reaktionspartnern in der Atmosphäre auf der Oberfläche abgeschieden.

Somit ist die Widerstandsschicht 3 auf dem Substrat 2 vorzugsweise weniger als 5 µm dick. Der Dünnfilmsensor ist plattenartig aufgebaut und unterteilt sich in ein erstes unteres Plattensegment 14, sowie in ein erstes und ein zweites oberes Plattensegment 12 und 13. Die beiden oberen Plattensegmente haben im Wesentlichen die gleiche Dimensionierung und werden durch einen Spalt 11 voneinander getrennt. Sie weisen in Fig. 2 eine rechteckige Form auf, können allerdings auch je nach Spalttiefe eine quadratische Form annehmen. Das untere Plattensegment 14 stellt die Integrität des Dünnfilmsensors her, d.h. in dieses Segment erstreckt sich der Spalt 11 nicht. Die Widerstandsschicht 3 ist als ein erstes und ein zweites rechteckiges Sensorelement, welche in Fig. 1-4 insbesondere als Widerstandselement 5 und 6 ausgebildet sind, auf dem Substrat 2 abgebildet. Das Material der Widerstandselemente kann Platin oder ein technisch gleichwertiges Material sein. Zum Trimmen des spezifischen Widerstandswertes weisen die Widerstandselemente Trimmschleifen auf. Andere Formen, beispielsweise oval oder dreieckig sind ebenfalls möglich, allerdings ermöglicht die rechteckige Form eine möglichst große Kontaktfläche mit dem zu messenden Medium. In Fig. 2 ist ersichtlich, dass jeweils eines der Widerstandselemente 5 oder 6 ausschließlich in jeweils einem der oberen Plattensegmenten 12 oder 13 angeordnet ist und sich nicht in das untere Plattensegment 14 erstreckt. Dies ermöglicht zusätzlich zum Spalt 11 eine bessere thermische Entkopplung der beiden Widerstandselemente 5 und 6 voneinander. Von den Widerstandselementen 5 und 6 gehen jeweils zumindest zwei Anschlussleitungen 7a, 7b und 8a, 8b zur Stromversorgung der Widerstandselemente ab, welche vorzugsweise ebenfalls im Dünnschichtverfahren auf das Substrat sein können. Alternativ können die Anschlussleitungen auch an die Widerstandselemente angelötet sein oder in anderer Weise verbunden sein. Diese Variante ist allerdings weniger bevorzugt, da sich das Lot sich lösen kann oder aufgrund ungleichmäßiger Verteilung auf dem Widerstandselement die Messung beeinflussen könnte. Die Anschlussleitungen können in ihrer Leiterbahnbreite auf die entsprechende Stromtragfähigkeit im Einsatztemperaturbereich variiert werden.

Die genau vier Anschlussleitungen 7a, 7b, 8a, 8b münden in insgesamt genau vier Kontaktstellen 9a, 9b, 10a, 10b, welche einen Anschluss einer stromführenden Leitung ermöglichen. Die Kontaktstellen sind durch die Anschlussleitungen ausreichend weit von den Widerstandselementen entfernt, um die Messung & die Beheizung des Messmediums durch die Widerstandselemente 5 oder 6 nicht oder nur wenig zu beeinflussen. In bestimmten Ausgestaltungen des Sensors können auch mehr oder weniger als vier Anschlussleitungen und Kontaktstellen vorgesehen sein. Kommentar: Der Flowsensor von IST hat drei Anschlüsse: die mittleren beiden sind als ein Anschluss ausgeführt.

Das jeweilige Widerstandselement 5 oder 6 erstreckt sich allerdings nicht über die gesamte Breite des jeweiligen Plattensegments 12 oder 13. Daher weisen die Plattensegmente 12, 13 und 14 Randbereiche 16 auf, welche nicht mit dem ersten oder zweiten Widerstandselement bedeckt sind.

Diese Widerstandsschicht 3 bzw. die Widerstandselemente 5 oder 6 sind aufgrund ihrer geringen Schichtdicke relativ gefährdet gegenüber chemischen oder mechanischen Angriffen, beispielsweise Abrasion durch Strömungspartikel oder Oxidationseffekten durch das zu messende Medium. Daher weist die Widerstandsschicht 3 eine zusätzliche Deckschicht 4 auf. Diese Deckschicht besteht aus Glas mit an das Substrat angepasstem Längenausdehnungskoeffizient. Dies hat den Vorteil, dass eine Materialanbindung zwischen Deckschicht 4 und Substrat 2 in den Randbereichen 16 zu einem Materialschluss führt, welcher aufgrund der gleichen Temperaturausdehungskoeffizienten beider Schichten eine besondere Temperaturwechselbeständigkeit aufweist und Temperaturspannungen im Material vermieden werden. Alternativ oder zusätzlich kann das Material insbesondere der Deckschicht oder ggf. auch dem Substrat noch Hartstoffe zugemischt werden, welche die mechanische Widerstandsfähigkeit des Materials erhöhen. Bekannte Hartstoffe sind Carbide, Nitride und/oder Silicide welche vorzugsweise in Konzentrationen von bis zu 10 Gew.% zum Material zugegeben werden.

Der Einsatz von Deckschichten gegen Abrasion und dergl. kann aus anderen Einsatzbereichen bereits bekannt sein. Die Besonderheit der Deckschicht 4 des Dünnschichtsensors ist allerdings, dass ein Kompromiss zwischen der Materialdicke zur Verhinderung des mechanischen Angriffs und der thermischen Leitfähigkeit gefunden werden muss. Allgemein gilt, dass eine Deckschicht von mehreren 100µm ein Widerstandselement zuverlässig vor Abrasion schützt. Eine solche Deckschicht würde allerdings den Wärmeeintrag durch das Widerstandselement 5 oder 6 in das Medium stark behindern, was in sehr lange Ansprechzeiten des Sensors insgesamt resultieren Medium stark behindern, was in sehr lange Ansprechzeiten des Sensors insgesamt resultieren würde. Daher sollte die Deckschicht weniger als 10 µm, vorzugsweise weniger als 5 µm, insbesondere weniger als 2 µm betragen. Zwar sind Schichtdicken von 2-10 µm noch realisierbar, allerdings hat sich eine Schichtdicke von weniger als 2 µm als besonders günstig erwiesen. Die Dicke der Deckschicht 4 kann je nach Applikationsfeld variieren. Sie sollte allerdings eine Schichtdicke von 10 nm nach Möglichkeit nicht unterschreiten.

Wesentliches Merkmal des Dünnschichtsensors 1 ist der Spalt 11, welcher den Dünnschichtsensor 1 in die zwei besagten oberen Plattensegmente 12 und 13 teilt. Bislang sind Dünnschichtsensoren meist plattenförmig aufgebaut. Ein zusätzlicher Arbeitsschritt der Segmentierung durch Einbringen des Spaltes 11 in den Dünnschichtsensor 1 und der damit verbundenen Fertigungsaufwand führt zu erheblichen Vorteilen beim Einsatz des Dünnschichtsensors in einem thermischen Durchflussmessgerät. Der Spalt dient der Isolation und der thermischen Entkopplung der beiden Widerstandselemente 5 und 6 voneinander. Der Spalt weist vorzugsweise eine Spaltbreite S3 von zumindest 3%, insbesondere zumindest 5% der Gesamtbreite des Dünnschichtsensors 1 auf. Die Breite S1 oder S2 des ersten oder des zweiten oberen Plattensegments 12 oder 13 beträgt somit vorzugsweise maximal 48,5%, insbesondere maximal 47,5% der Gesamtbreite S0 des Dünnschichtsensors. Die Spalttiefe L2 des Spaltes 11 beträgt vorzugsweise zwischen 70% und weniger als 120% der Gesamtlänge eines Widerstandselements 5 oder 6, jedoch weniger als 90% der Gesamtlänge L1 des Dünnfilmsensors, wobei die Gesamtlänge des Widerstandselements 5 oder 6, die Gesamtlänge L1 des Dünnfilmsensors 1 und die Spalttiefe L2 die gleiche Orientierungsrichtung aufweisen. Diese Spalttiefen ermöglichen eine besonders gute thermische Entkopplung der Widerstandselemente einerseits und andererseits durch die maximale Spalttiefe eine weitergehende Materialschwächung und somit eine Bruchgefahr des Dünnschichtsensors 1 in Längsrichtung in Verlängerung des Spaltes 11 verringert.

Fig. 3 und 4 stellen die Einbausituation des Dünnschichtsensors 1 in einem thermischen Durchflussmessgerät 22 dar.

Der Dünnschichtsensor 1 ist im Bereich des unteren ersten Plattensegments 14, in welches sich nicht der Spalt 11 erstreckt, in einem keramischen Sockel 21 festgelegt. Der keramische Sockel 21 ist in ein Schutzrohr 22 eingesetzt. Es sind vielfältige Varianten der Befestigung des Sockels 21 im Schutzrohr 22 denkbar, von denen lediglich eine Variante in Fig. 3 und 4 dargestellt ist. Dabei ist weist die Innenwandung des Schutzrohres 22 einen Vorsprung 18 auf, welcher sich radial von der Innenwandung in Richtung der Rohrachse erstreckt. Dieser Vorsprung 18 ist ringförmig umlaufend und dient als Auflage des Sockels 21 im Schutzrohr 22. Sofern der Sockel 21 in dem Schutzrohr 22 angeordnet ist, bildet das Schutzrohr einen zumindest einseitig geschlossenen Innenraum 17 aus, in welchem Leitungen 20 zur Versorgung des Dünnschichtsensors 1 mit Energie und zur Übertragung der Messsignale, angeordnet sind.

Zwischen dem Schutzrohr 22 und dem Sockel 21 ist ein Anbindungsschicht 24, insbesondere ein Dichtelement angeordnet, welches ein Eindringen des Messmediums in den Innenraum 17 verhindert. Dieses Dichtelement kann beispielsweise ein O-Ring aus einem chemisch und thermisch beständigen Material, beispielsweise ein Teflonring, sein - welcher beispielsweise auch THF-Dämpfen und Dauergebrauchstemperaturen bis zu 260°C standhält. Die Anbindungsschicht 24 kann allerdings auch ein metallischer oder keramischer Natur sein, beispielsweise ein metallisches Lot. Zur Positionierung des Sockels 21 im Schutzrohr 22 in axialer Richtung ist in Fig. 2 eine ringförmige Arretierung vorgesehen. Diese ringförmige Arretierung 19 kann durch an sich bekannte Befestigungsmittel am Schutzrohr festgelegt werden, vorzugsweise wiederlösbar durch Verschrauben, Verklemmen, Verrasten oder dauerhaft durch Verschweißen oder Verlöten.

Zwar sind beide Widerstandselemente 5 und 6 grundsätzlich beheizbar, allerdings fungiert eines der Widerstandselemente als passives Element zur Ermittlung einer ersten Mediumstemperatur und das zweite der Widerstandselemente als aktives Element zum Einbringen einer Wärmemenge in das Medium und zur Ermittlung einer zweiten Mediumstemperatur nach dem Einbringen der Wärmemenge.

Insgesamt eignet sich der Dünnschichtsensor zum Messen von Medien bei Prozesstemperaturen von über 200°C, vorzugsweise über 250°C, bei welchen gelötete Sensoren meist an ihre Grenzen stoßen

Bevorzugte Messbereiche des Dünnschichtsensors betragen 1 bis 240 kg/m²s. Bevorzugte Druckbereiche des Dünnschichtsensors betragen 1 bis 40 bar.

Weitere Teile des thermischen Durchflusssensors in Fig. 3 & 4 nicht näher dargestellt sind.

Nachfolgend wird ein Herstellungsverfahren des thermischen Durchflussmessgerätes, wie es in Fig. 3 und 4 dargestellt ist, näher beschrieben.

In einem ersten Schritt erfolgt die Bereitstellung eines plattenförmigen Dünnschichtsenors. Diese Bereitstellung umfasst das übliche Herstellungsverfahren nach der Dünnschichttechnologie. Dabei erfolgt zunächst Bereitstellung eines keramischen Substrates 2 in einer Kammer. Diese Kammer wird evakuiert und kann ggf. anschließend mit einer definierten Atmosphäre flutet werden oder im evakuierten Zustand weiterbetrieben werden. Das Aufbringen einer Widerstandsschicht 3 erfolgt durch Verdampfen, Zerstäuben und/oder Chemische Bildung der entsprechenden Komponente in der Dampfphase erfolgen, welche sich anschließend auf der Oberfläche des Substrates ablagert. Die Schichtdicke kann dabei zwischen einer atomaren Schicht und bis zu ca. 5 µm variieren. Die Produktion dieser Sensoren kann als Wafer erfolgen. Anschließend kann das Abdeckmaterial, vorzugsweise ein keramisches Abdeckmaterial 4, in einem weiteren Fertigungsschritt aufgebracht werden. Bevorzugte Fertigungsschritte sind dabei Drucken oder Einbrennen. Derartige Fertigungstechniken sind grundsätzlich aus der Keramikverarbeitung bekannt und können vorteilhaft auf die Dünnschichtsensorherstellung übertragen werden. Nach dem Bereitstellen des Dünnschichtsensors steht ein Sensor mit rechteckiger Oberfläche zur Verfügung. Dabei sind zwei Widerstandselemente mit im Wesentlichen identischer Form auf dem Dünnschichtsensor angeordnet.

In einem zweiten Schritt erfolgt das Einbringen eines Spaltes 11 in diesen Dünnschichtsensor unter Aufteilung des Dünnschichtsensors in zumindest Teilsegmente mit gleichen Abmessungen, auf denen jeweils ein Widerstandselement teilweise oder vollständig angeordnet ist. Die Anordnung des jeweiligen Widerstandselements auf dem Teilsegment des Dünnschichtsensors ist vorzugsweise zu jedem weiteren Teilsegment im Wesentlichen identisch. Das Einbringen des Spaltes kann vorzugsweise durch einen Laser erfolgen, da ein Laserschnitt eine hohe Genauigkeit aufweist. Eine weitere jedoch weniger bevorzugte Variante ist das Einbringen des Spaltes 11 durch eine Keramiksäge.

In einem dritten Schritt erfolgt die Verbindung von Stromversorgungs- und Signalübertragungsleitungen 20 eines Elektronikbauteils eines thermischen Duchflussmessgerätes 23 mit dem Dünnfilmsensor 1 an dafür vorgesehene und auf dem Dünnschichtsensor angeordnete Kontaktstellen 9a, 9b, 10a, 10b.

In einem optionalen vierten Schritt kann der Dünnschichtsensor in einen keramischen Sockel 21 gefasst werden. Dieser Sockel dient einerseits zur zusätzlichen Befestigung der Stromversorgungs- und Signalübertragungsleitungen 20 und bietet andererseits einen Angriffspunkt für die Festlegung des Dünnfilmsensors in einem Gehäuse. Die Anbindung des Dünnschichtsensors 1 an den Sockel 21 erfolgt vorzugsweise durch Einschmelzen mit einem niedrig-schmelzenden Temperaturschmelzglas.

In einem fünften Schritt erfolgt die Positionierung des Dünnfilmsensors im Gehäuse eines thermischen Durchflussmessgerätes, derart, dass der Dünnfilmsensor zumindest bereichsweise aus dem Gehäuse hervorsteht. Das Gehäuse kann vorzugsweise eine zylindrische Form mit einer Gehäuseachse aufweisen, wobei eine Arretierung des Dünnfilmsensors in Axialrichtung des Gehäuses erfolgen kann.

Im Anschluss können alle Verbindungsstellen und der gesamte Sensoraufbau auf seine Dichtigkeit überprüft werden. Dies kann durch Gasdichtigkeitsprüfungen erfolgen, wie sie im Bereich des Gehäusebaus bekannt sind.

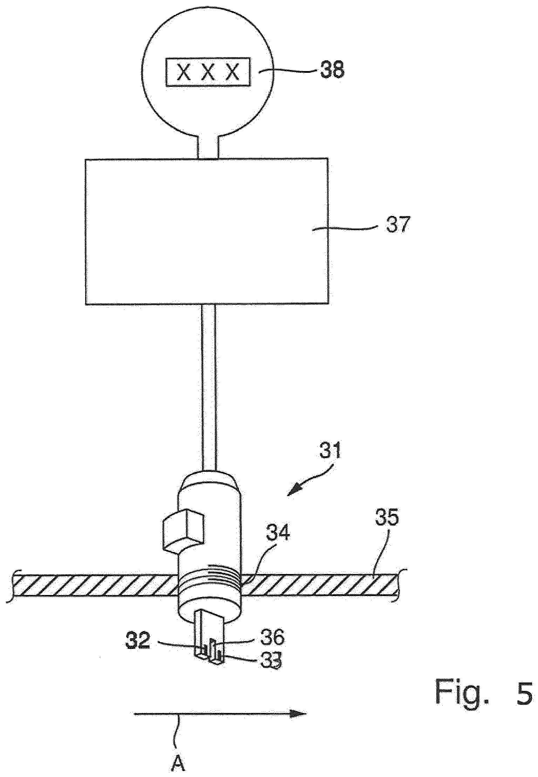

Fig. 5 zeigt ein Beispiel, durch welche optionalen Bauteile der thermische Durchflusssensor noch ergänzt werden kann. Dies betrifft u.a. eine Steuer- und/oder Regeleinheit, sowie eine Auswerte- und/oder Anzeigeneinheit. Diese sind in Fig. 5 voneinander funktional getrennt dargestellt, sie können alternativ allerdings gemeinsam in einem Bauteil, beispielsweise einem Mikroprozessor realisiert werden.

Wie man anhand von Fig. 5 erkennt, ist der Dünnschichtsensor dem Messmedium direkt ausgesetzt.

Ein Dünnschichtsensor, wie er in Fig. 5 dargestellt wird eignet sich besonders bevorzugt in der Zweileitertechnologie. Diese Technologie beruht auf einer low-Power Energieversorgung. Typischerweise steht der Messelektronik bei Zweileitergeräten lediglich eine begrenzte Leistung zur Verfügung. Davon müssen Systeme, wie beispielsweise der Mikroprozessor bzw. Mikrocontroller und der thermische Durchflusssensor betrieben werden. Als reine Heizleistung steht somit bei kontinuierlicher Energiezufuhr 5-10 mW zur Verfügung. Ein Sensor mit einem Powerkoeffizient von 5 mW/K und einer Heizfläche von 1,5*1,5 mm² kann mit einer solchen Leistung lediglich auf eine Übertemperatur von 1-2K gegenüber der Mediumstemperatur erwärmt werden. Üblicherweise liegt die Übertemperatur im thermischen Durchflussbereich bei 7-10 K. Eine Verbesserung der Übertemperatur kann durch Miniaturisierung und bessere thermische Isolation zwischen dem aktiven und dem passiven Sensorelement erreicht werden. Ein Sensor mit einer Heizfläche 1*1 mm² und erreicht einen Powerkoeffizient von 2,2 mW/K. bei gleicher Anströmung wie im vorhergehenden Beispiel. Ein kontinuierlicher Heizbetrieb ergäbe somit eine Temperaturdifferenz zwischen 2 bis 4,5 K, wobei durch die Isolation des erfindungsgemäßen Sensors der Powerkoeffizient weiter gesenkt und die Temperaturdifferenz weiter erhöht werden kann. Zum Einsatz in der Zweileitertechnologie sollte optimalerweise der erfindungsgemäße Dünnschichtsensor daher mit anhand eines nachfolgend beschriebenen Verfahrens betrieben werden.

Nicht in Fig. 5 dargestellt ist ein bevorzugter Energiespeicher, welcher an verschiedenen Positionen im thermischen Durchflussmessgerät vorgesehen werden kann.

Fig. 5 zeigt einen Sensor eines thermischen Durchflussmessgerätes, welcher als ein thermischer Massestromsensor 31 ausgebildet ist.

Dünnschicht- bzw. Dünnfilmsensoren sind feststehende Begriffe aus der Sensortechnik. Üblicherweise werden dabei Schichten von atomarer Größe bis hin zu ca. 5 µm Dicke auf der Oberfläche eines Substrates abgeschieden. Dies erfolgt entweder als Abscheidung unter Vakuum oder innerhalb einer definierten Atomsphäre, z.B. innerhalb einer Schutzgasatmosphäre wie Argon. Das abzuscheidene Medium wird dabei typischerweise zerstäubt, verdampft oder chemisch durch Reaktion mit anderen Reaktionspartnern in der Atmosphäre auf der Oberfläche abgeschieden.

Fig. 5 zeigt ein thermisches Durchfilussmessgerät 31 mit einem Durchflussmessgeräteelement 36, welches einen Dünnschichtsensor aufweist. Dieses Durchflussgeräteelement 36 ist an der Wandung 35 eines Messrohres angeordnet ist, derart, dass der Dünnschichtsensor in das Messrohr hineinragt und in direktem Kontakt mit dem Messmedium steht. Ein O-Ring 34 kann dabei das Entweichen des Messmediums an der Einsatzstelle des Durchflussgeräteelements im Messrohr verhindern.

Dargestellt ist ein erstes passives Sensorelement 32 zur Ermittlung einer ersten Mediumstemperatur und ein aktives Sensorelement 33, welches eine Heizleistung in das Medium einspeist. Diese sind in Fig. 1-4 als Widerstandselemente ausgebildet und sind im Normalfall mit einer Abdeckschicht als Abrasionsschutz überdeckt.

Das Durchfilussmessgeräteelement 36 weist dabei einen im Wesentlichen zylindrischen Gerätekorpus und eine rechteckige Sensorspitze, den Dünnschichtsensor 1, auf. An bzw. in dieser Sensorspitze sind die Sensorelemente 32 und 33 angeordnet. Vom Durchflussmessgeräteelement gehen zwei Leitungen ab, welche an eine Steuereinheit 37 angeschlossen sind. An dieser Steuereinheit 7 ist eine Anzeigeeinheit 38 angebracht. Die in Fig. 5 dargestellte Ausführungsvariante ist dabei selbstverständlich nur ein Beispiel und andere konstruktive Ausführungsvarianten sind im Rahmen der Erfindung ebenfalls denkbar. Nicht dargestellt ist ein Energiespeicher, welches in Fig. 5 entweder im Durchflussmeßgeräteelement 31 selbst, in der Steuereinheit 37 oder in der Anzeigeeinheit 38 angeordnet ist.

Aufgrund ihrer geringen Materialdicke zeichnen sich die als Dünnfilmelemente bzw. Dünnschichtelemente ausgebildeten thermischen Durchflussmesssensoren durch eine damit einhergehende günstige Temperatur- und Signalübertragung zwischen dem aktiven Sensorelement und dem Medium als auch zwischen den passiven Sensorelementen und dem Medium aus. Dieser günstige Temperaturübergang bewirkt ein besonders gutes Ansprechverhalten des Dünnfilmelements.

Optimalerweise kann durch die Energieversorgung eines thermischen Durchflussmessgerätes im Allgemeinen und eines thermischen Durchflussmessgerätes mit einem Dünnschichtsensor im Besonderen nunmehr auch ein Sensor mit einem geringen Energiebedarf bei einer Leistung von etwa 43 ... 540 mW realisiert werden.

Bevorzug handelt es sich im gezeigten Fall um ein Zweileiter-Durchflussmessgerät, bei dem die Versorgungsleitung und die Feldbusleitung auf einer Leitung zusammen geschaltet sind, so dass nur eine zweiadrige Leitung notwendig ist, um das Durchflussmessgerät 31 mit Energie zu versorgen und gleichzeitig die Kommunikation mit einer entfernten Leitstelle zu gestatten.

Der geringe Strombedarf kann durch eine hier nicht näher dargestellte Regel- und/oder Steuereinheit derart realisiert werden, indem das aktive Sensorelement, also die Heizvorrichtung, nur intervallartig mit einer Leistung versorgt wird.

Durch die gepulste Leistungszufuhr erfolgt auch nur ein gepulster Wärmeeintrag in das Medium durch das Heizelement. Dabei weist das Durchflussmessgerät vorzugsweise eine Energiespeichereinheit, beispielsweise eine kapazitive Energiespeichereinheit wie ein Kondensator oder eine induktive Energiespeichereinheit, auf. Dieser Energiespeicher ermöglicht eine ausreichende Energieversorgung des Dünnschichtsensors, so dass ein quantifizierbarer und detektierbarer Wärmeeintrag erfolgt, welcher eine Durchflussmessmessung nach dem thermischen Prinzip ermöglicht.

Die Steuerung kann auf unterschiedliche Art und Weise erfolgen. Ausgehend von einer konstanten Energiezufuhr an den Energiespeicher, kann dieser bei Überschreiten eines Sollwertes die gespeicherte in einem Zeitfenster freisetzen und somit dem Medium innerhalb dieses Zeitfensters mehr Energie zuführen als dies ohne die Energiespeicherung möglich wäre. Dieser Energieeintrag kann solange erfolgen bis der Energiespeicher entleert ist.

Alternativ kann das aktive Sensorelement auch mit einem konkreten Energiebetrag innerhalb eines festgelegten Zeitfensters versorgt werden.

Folgende Steuerung hinsichtlich der Höhe des Energiebetrages hat sich als besonders günstig erwiesen:
a) Einbringen einer ersten Wärmemenge durch das aktive Sensorelement in ein strömendes Medium;
b) Ermittlung eines ersten Masseflusswertes oder einer dazu proportionalen Größe nach dem Prinzip der thermischen Durchflussmessung und
c) Einbringen einer zweiten Wärmemenge durch das aktive Sensorelement, wobei die Höhe der zweiten Wärmemenge abhängig ist vom besagten ersten Masseflusswert oder der dazu proportionalen Größe.

Sofern die gespeicherte Energie ausreicht um eine entsprechende Energiemenge bereitzustellen, kann die Energiemenge und damit auch die in das Medium eingetragene Wärmemenge an den Massefluss des Mediums angepasst werden. Dadurch wird immer eine ausreichende Temperaturdifferenz geschaffen, um einen Massefluss auch bei wenig zu Verfügung stehender Energie zu ermitteln.

Bei der gepulsten Energieversorgung des aktiven Elements kann es unter Umständen auch nicht zu einer Einpegelung einer konstanten Temperatur bei konstantem Massefluss bzw. eines konstanten Temperaturunterschiedes kommen.

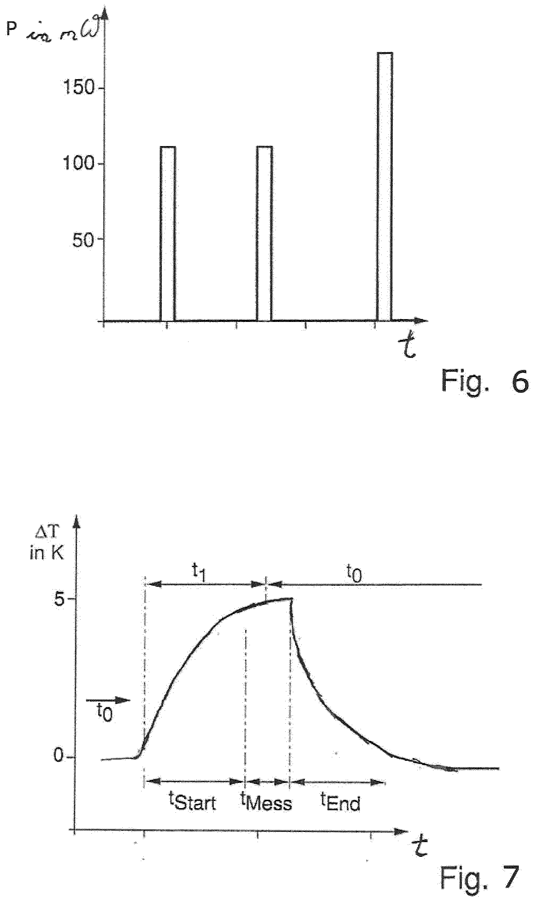

In Fig. 7 ist ein schematischer Verlauf des Temperaturunterschiedes zwischen den beiden Sensorelementen 32 und 33 dargestellt. Die Temperaturkurve weist eine Vorheizzeit tₛₜₐᵣₜ auf, in welchem sich das aktive Sensorelement durch Versorgung mit einem konkreten Energiebetrag aufheizt.

Der sich an die Vorheizzeit anschließende Zeitintervall t_{Mess} charakterisiert den Zeitraum, in welchem eine Messung der Temperatur erfolgt. In diesem Zeitraum ist die maximale Energieversorgung des aktiven Sensorelements erreicht oder sie ist bereits überschritten. Der Verlauf der Temperaturdifferenz in diesem Intervall weist dabei vorzugsweise die Form einer Exponentialfunktion auf. Zwar ist eine möglichst konstante Temperaturdifferenz im Bereich des Messintervalls wünschenswert, allerdings kann bei der Messung die Exponentialform vorteilhaft durch eine geeignete Kalibration kompensiert werden.

So ist es beispielsweise möglich eine Kalibration des Durchflussmessgerätes gegen Luft durchzuführen und aufgrund dieser Kalibration eine Kompensation der Exponentialform insbesondere bei der Messung von Gasen und Gasgemischen mit annähernd derselben spezifischen Wärmespeicherkapazität wie Luft zu erreichen.

Weiterhin in der Kalibrierung kann die spezifische Wärmespeicherkapazität der Sensorelemente und des Sensormaterials berücksichtigt werden.

Die Leistung die dem System zur Verfügung steht ist minimal insgesamt etwa 43 mW, bei einer Klemmenspannung von 12 V.

Um ein möglichst gleichbleibendes Wärmeeintragsverhalten innerhalb des Messfensters zu gewährleisten, ist es von Vorteil, wenn der Energieeintrag bei einer Höchsttemperaturunterschied von max. 10 K einen konstanten Wert annimmt. Die überschüssige Leistung kann aufgespart und beispielsweise für Anzeige- und/oder Warnsignalgeber verwendet werden.

Zur Verfügung stehende Überschussenergie kann auch zur Verlängerung der Signalsdauer oder der -auswertung genutzt werden.

In Fig. 1 ist lediglich ein Ausführungsbeispiel eines Sensors eines thermischen Durchflussmessgerätes abgebildet. Eine typische Klemmenspannung eines derartigen Durchflussmessgerätes beträgt nominal 12 V.

In einem zweiten Ausführungsbeispiel kann das aktive Sensorelement nach dem Wärmeeintrag in ein passives Sensorelement umschalten.

In einem dritten Ausführungsbeispiel ermittelt das zweite passive Sensorelement die Temperatur des aktiven Sensorelements, zur Nachverfolgung des Temperaturabfalls innerhalb des Messzeitfensters. Durch diese Autokalibration kann ein Kompensationsfaktor für die Messung ermittelt werden.

Bekannte Sensorelemente sind die sogenannten Pt 100 Sensorelemente. Es kann allerdings bevorzugt als aktives Sensorelement ein Nickel-Chrom Element eingesetzt werden, welches mäanderisiert ist und einen im Wesentlichen konstanten Widerstand bei Temperaturen zwischen 0-150°C, vorzugsweise 5-120°C, besonders bevorzugt 10-90°C aufweist.

Eine bevorzugte Kalibration des vorgenannten Dünnschichtsensors erfolgt vorzugsweise zweistufig.

Zur Ermittlung der Temperaturabhängigkeit des Widerstandes eines Sensorelements wird in einem ersten Schritt eine sogenannte Temperatur-Kennlinie als Kalibration aufgenommen, welche den jeweiligen Widerstand des Sensorelements bei unterschiedlichen Temperaturen in Form von Messdaten speichert.

Anschließend wird in einem zweiten Schritt ein spezifischer Massefluss [kg/m²s] und dem dazugehörigen Leistungskoeffizient [W/K] aufgenommen. Diese Aufnahme erfolgt mehrmals zur Bestätigung der Wiederholbarkeit der Messung.

In einer weiteren Ausführungsvariante der Erfindung ist ein Durchflussmessgerät durch eine gepulste Energieversorgung auch eine zeitmultiplexe Steuerung des aktiven Sensorelements möglich. Dabei besteht der Sensor aus einem passiven Sensorelement zur Ermittlung der Mediumstemperatur und einem aktiven Sensorelement.

Das aktive Sensorelement kann dabei vorzugsweise zwischen der Temperaturmessung und der Leistungsmessung umschalten und wird impulsartig mit Energie versorgt.

Durch eine sogenannte zeitmultiplexe Ansteuerung des Sensorelements sind mehrere zeitlich nacheinanderfolgende Betriebszustände eines Sensorelements realisierbar.

In einem ersten Betriebszustand des Sensorelements erfolgt eine Ermittlung der Mediumstemperatur. Während dieses Zustandes kann der Energiespeicher Energie laden.

Im Anschluss schaltet das Sensorelement auf einen zweiten Betriebszustand um. Hier versorgt der Energiespeicher das Sensorelement mit Energie. Dadurch wird eine Wärmemenge an der Medium abgegeben und ein Temperaturprofil entsprechend dem Strömungsprofil des Mediums ausgebildet. Dabei entlädt sich der Energiespeicher.

In einem dritten Betriebszustand kann das Sensorelement seine Temperatur nach der eingetragenen Energie ermitteln.

Um diese drei Betriebszustände zu realisieren, wird ein möglichst geringes Zeitfenster benötigt, welches insbesondere bei höheren Durchflussraten, beispielsweise über 2,5 m/s realisierbar ist.

Besonders bevorzugt kann das Gerät die gängigen Zweileiter-Interfaces der Prozessindustrie unterstützen. Dies betrifft insbesondere HART, Profibus PA, Foundation Fieldbus FF.

Das Durchflussmessgerät kann zudem sowohl im Standard als auch in Explosionsgeschützten Bereichen der industriellen Prozess-Messtechnik und -Automation eingesetzt werden. Insbesondere kann das Durchflussmessgerät nach der Namur-Norm ausgerüstet werden.

Alternativ oder zusätzlich zu einer Heizvorrichtung als aktives Sensorelement kann das aktive Sensorelement auch als Lichtquelle, insbesondere als Infrarotquelle ausgebildet sein. Auch bei dieser Art des gepulsten Wärmeeintrags ist die Ansprechzeit der Lichtquelle sehr kurz, so dass das Einbringen der Wärmemenge und der Ausbildung eines Temperaturprofils innerhalb des Messzeitraumes ausreicht.

Die Steuerung der Parameter zum Betreiben des thermischen Durchflussmessgerätes (Impulsdauer/Impulspause) erfolgt in Abhängigkeit des zuvor ermittelten Durchflusses in Verbindung mit der Versorgungsspannung und/oder ggf. Kundenmodifikationen.

Ggf. kann über einen weiteren 2-Leiteranschluss dem Sensor zusätzlich Energie zur Messung zugeführt werden. Dadurch kann eine Einregelung einer höheren Temperaturdifferenz zwischen den Sensorelementen erfolgen und somit eine genauere Messung ermöglicht werden.

Sofern die Sensorelemente 32 und 33 jeweils beheizbar sind, kann auch in einer weiteren Ausführungsvariante ein wechselseitiges Beheizen der Sensorelemente erfolgen.

Das erfindungsgemäße thermische Durchflussmessgerät weist ein Energiespeicherelement und eine Steuer- und/oder Regeleinheit auf, zur getakteten Energieversorgung des beheizbaren Sensorelements, derart, dass der Sensor
eine Wärmemenge intervallartig in das Messmedium eingebracht wird mit Intervallpausen t₀ in welchen keine Wärmemenge in das Medium eingebracht wird und Heizintervallen t₁ in welchen Wärmemengen in das Medium eingebracht werden, und wobei
die Intervallpausen t₀ länger andauern als die Heizintervalle t₁.

Ein beheizbares Sensorelement kann beispielsweise eine Heizvorrichtung mit einem Temperaturfühler oder ein beheizbares Widerstandsthermometer sein. Als Heizvorrichtung kann beispielsweise ein Heizdraht oder eine Lichtquelle, insbesondere eine Infrarotquelle, sein. Es sind allerdings auch andere beheizbare Sensorelemente für die Anwendung denkbar, welche imstande sind eine Wärmemenge in ein Medium einzubringen.

Durch die spezielle Steuerung der Energiespeicherung und Energieabgabe gelingt ein besonders energiesparender Betrieb eines thermischen Durchflussmessgerätes.

Es ist besonders von Vorteil, wenn der Sensor als ein Dünnschichtsensor ausgebildet ist. Durch die Ausbildung als Dünnschichtsensor weist der Sensor ein schnelles Ansprechverhalten gegenüber Temperaturänderungen auf. Das heißt, die Wärme wird vergleichsweise schnell an das Medium übertragen, so dass das Zeitfenster für den Wärmeeintrag gering gehalten werden kann. Durch den Energiespeicher kann bei einer geringen Energiezuführung die Energie zwischengespeichert und als Energiepaket innerhalb der kurzen Heizperiode an das beheizbare Sensorelement abgegeben werden. Durch die kurzzeitige Leistungsspitze und das gute Ansprechverhalten kann in kürzester Zeit ein Temperaturprofil aufgebaut werden, welches abhängig ist vom Massefluss oder einer dazu proportionalen Größe. Dieses Temperaturprofil kann detektiert und ausgewertet werden.

Das Energiespeicherelement kann vorteilhaft mit einer konstanten Energie- bzw. Leistungsversorgung von bis zu minimal 43 mW ± 1 mW gespeist werden. ± 1 mW gibt dabei die Schwankungsbreite der Leistung an. Das Energiespeicherelement kann selbstverständlich auch mit wesentlich höherer Energie gespeist werden, allerdings ist die Funktionsfähigkeit des Durchflussmessgerätes auf bei einer derart kleinen Dauerenergieversorgung noch gewährleistet.

Es ist von Vorteil, wenn das Energiespeicherelement ausgerüstet ist, um dem Durchflussmessgerät eine Leistung während eines Heizintervalls t₁ von mehr als 44 mW zur Verfügung zu stellen, sofern die Energieversorgung des Durchflussmessgerätes innerhalb des besagten Heizintervalls 43 ± 1 mW beträgt.

Es ist von Vorteil, wenn die Steuer- und/oder Regeleinheit derart ausgebildet ist, dass das erste beheizbare Sensorelement in zumindest zwei Betriebsmodi betreibbar ist, wobei eine Auswerteeinheit vorgesehen ist, welche in einem ersten Betriebsmodus des Sensorelements einen Leistungsverbrauch ermittelt und in einem zweiten Betriebsmodus des Sensorelements eine Temperatur ermittelt. Dadurch kann ein Sensorelement zur Ermittlung des beheizbaren Sensorelements eingespart werden.

Um ein noch schnelleres Ansprechverhalten des Sensors zu ermöglichen und um Energieverluste aufgrund von Wärmeleitung durch Kontaktmedien, insbesondere der Messrohrwandung, zu verhindern ist der Sensor mediumsberührend im Messrohr angeordnet.

Bei einer Positionierung an der Messrohrwandung, wie dies bei vielen Dünnschichtsensoren üblich ist, kann die Messung des Masseflusses aufgrund von Verwirbelungseffekten gestört sein. Unter Umständen kann dies eine Limitierung des thermischen Durchflussmessgerätes auf einen begrenzteren Masseflussbereich zur Folge haben. Bei optimaler Positionierung des Sensors ragt dieser in die Mediumsströmung hinein. Daher ist es von Vorteil, wenn ausgehend von einer Messrohrinnenwandung zur Messrohrachse hin in das Messmedium um zumindest 5 mm, vorzugsweise um zumindest 2 cm, hineinragt.

Es ist von Vorteil, wenn das thermische Durchflussmessgerät zumindest ein zweites Sensorelement aufweist zur Ermittlung der Mediumstemperatur während des Einbringens einer Wärmemenge in das Medium durch das erste beheizbare Sensorelement. Zwar kann das erste beheizbare Sensorelement ebenfalls die Mediumstemperatur ermitteln, allerdings nicht zeitgleich mit dem Einbringen der Wärmemenge in den Mediumsstrom, sondern erst nach dessen Abkühlung. Sofern sich innerhalb dieses Zeitintervalls allerdings die Mediumstemperatur geändert hat, entsteht ein Messfehler. Eine solche sehr kurzzeitige Änderung ist allerdings vergleichsweise selten.

Es ist von Vorteil, wenn die Steuer- und/oder Regeleinheit ausgebildet ist zur Steuerung der Taktdauer der zugeführten Energie und/oder des Umfangs der zugeführten Energie anhand zumindest einer Prozessgröße ausgesucht aus einer Gruppe bestehend aus der Flussrate des Messmediums, des Masseflusses des Messmediums, der dem Durchflussmessgerät zugeführten Versorgungsspannung und/oder messmediumsspezifische Eigenschaften, insbesondere der Stoffzusammensetzung des Messmediums, der Dichte und/oder der Wärmekapazität Messmediums. Anhand dieser Parameter kann eine Steuerung dahingehend erfolgen, wie viel Energie innerhalb welcher Zeit freigesetzt wird. Verständlicherweise ermöglicht ein länger andauernder, jedoch vergleichsweise geringer Energieeintrag eine längere Messzeit und damit zuverlässigere Ergebnisse. Es kann allerdings vorkommen, dass bei zur Ausbildung eines Temperaturprofils ein zunächst vergleichsweise größerer Energieeintrag in das Medium erfolgen muss, um überhaupt verlässliche Ergebnisse zu erhalten. In diesem Fall verkürzt sich die Messzeit, da das zur Verfügung stehende Energiereservoir schneller aufgebraucht ist.

Das Durchflussmessgerät kann vorteilhaft über einen Anschluss zum Verbinden an eine Zweileiterstromschleife eines Feldgerätes verfügen und über diese, vorzugsweise ausschließlich über diese, betreibbar sein. Durch die energiesparende Betriebsweise des thermischen Durchflussmessgerätes, ist dieses in der Zweileiter-Technologie, also insbesondere auch in explosionsgeschützten Bereichen, verwendbar.

Dabei ist das Durchflussmessgerät vorteilhaft bereits mit einer Leistung bereits ab 43 mW innerhalb eines Schwankungsbereichs von 1 mW betreibbar.

Übliche thermische Durchflussmessgeräte verfügen zumeist über Sensorelemente mit Heizvorrichtungen welche überwiegend Heizen und ggf. den Heizbetrieb nur kurzzeitig unterbrechen, um eine Temperatur des Sensorelements zu ermitteln. Typische Tastraten, Heizen:Temperaturmessen, betragen dabei 95:5. Auch Sensoren mit wechselseitig beheizten Sensorelementen sind bekannt. Allerdings bringt auch der bislang bekannte Sensor, unabhängig welches Sensorelement gerade beheizt wird mit längeren Heizperioden Wärme in das Medium ein. Im vorliegenden thermischen Durchflussmessgerät bringt der Sensor aufgrund des kurzzeitigen Energieeintrages nur sehr kurzzeitig Wärme ein. In den demgegenüber wesentlich längeren Heizpausen erfolgt eine Temperaturmessung des Mediums und des jeweils beheizten Sensorelements. Das Verhältnis t₀ :t₁ beträgt vorzugsweise zwischen 2:1 bis 40:1, insbesondere 5:1 bis 25:1. Ein wechselseitiger Heizbetrieb der Sensorelemente kann auch beim erfindungsgemäßen thermischen Durchflussmessgerät angewandt werden.

Ein Verfahren zur Bestimmung und/oder Überwachung eines Massedurchflusses eines Messmediums durch ein Messrohr mit dem thermischen Durchflussmessgerät, welches den Sensor mit zumindest dem ersten beheizbaren Sensorelement und dem Energiespeicherelement zur Versorgung des Sensorelements mit Energie aufweist umfasst die folgenden Schritte: die Speicherung von eingespeister Energie durch das Energiespeicherelement und die Abgabe eines Energiebetrag über ein Zeitfenster an das Sensorelement; wobei der abgegebene Energiebetrag größer ist als der Betrag der in diesem Zeitfenster eingespeisten Energie.

Durch dieses Verfahren kann ein energiesparender Betrieb eines thermischen Durchflussgerätes realisiert werden

Bislang wurden thermische Durchflussgeräte aufgrund des nahezu durchgehenden Heizbetriebes typischerweise meist mit einer Leistung von über 500 mW betrieben. Aufgrund der neuen Arbeitsweise kann das Durchflussmessgerät mit einer im Zeitfenster eingespeisten Leistung bis zu einem Minimalwert von etwa 43 mW betrieben werden.

Es ist von Vorteil, wenn der Betrag der an das Sensorelement abgegebenen Energie folgendermaßen gesteuert wird:
A Einbringen einer ersten Wärmemenge in Abhängigkeit von einer ersten abgegebenen Energiemenge durch das aktive Sensorelement in ein strömendes Medium;
B Ermittlung eines ersten Masseflusswertes oder einer dazu proportionalen Größe nach dem Prinzip der thermischen Durchflussmessung und
C Änderung des Betrages der abgegebenen Energiemenge in Abhängigkeit vom ermittelten ersten Masseflusswert oder einer dazu proportionalen Größe.
Dadurch kann ein optimiertes Energiemanagement des Messbetriebes erfolgen.

So weist das Energiespeicherelement einen finiten Energiebetrag auf, wobei ein erster Teil des Energiebetrages des Energiespeicherelements aufgewandt wird zum Betreiben des Sensorelements und der verbleibende überschüssige zweite Teil des Energiebetrages vorteilhaft vollständig zum Betrieb des Durchflussmessgerätes genutzt wird. Beispielsweise kann dadurch einer Anzeige- und Auswerteeinheit mehr Energie zugeführt werden, um die gemessenen Werte visuell sichtbar zu machen.

Nach dem Einbringen der Wärmemenge kann eine Temperaturmessung des Sensorelements erfolgen. Diese dient Nachverfolgung des Temperaturabfalls des Sensorelements während der Temperaturmessung zur Autokalibration des Durchflussmessgerätes.

Das thermische Durchflussmessgerät kann nach ein Verfahren kalibriert werden, welches die folgenden Schritte umfasst:
A Bereitstellen des thermischen Durchflussmessgerätes;
B Ermittlung einer Temperatur-Kennlinie bei variablen Widerstandswerten
C Ermittlung einer Kennlinie des Leistungskoeffizienten bei variablen Flussraten.

Das thermische Durchflussmessgerät findet zur Ermittlung des Masseflusses eines Messmediums in der industriellen Prozess-Messtechnik und -Automation Anwendung. Es sind zwar auch Durchflusssensoren im Bereich der Autoindustrie zur Messung von Abgasströmen bekannt, diese gehören allerdings nicht zum vorgenannten Verwendungsgebiet.

Insbesondere wird das thermische Durchflussmessgerät als Zweileiter-Messgerät genutzt.

### Bezugszeichenliste

- 1: Dünnschichtsensor
- 2: Substratschicht
- 3: Widerstandsschicht
- 4: Deckschicht
- 5: Widerstandselement
- 6: Widerstandselement
- 7a, 7b: Anschlussleitungen;
- 8a, 8b: Anschlussleitungen;
- 9a, 9b: Kontaktstellen;
- 10a, 10b: Kontaktstellen;
- 11: Spalt
- 12: erstes oberes Plattensegment;
- 13: zweites oberes Plattensegment;
- 14: unteres Plattensegment;
- 16: Randbereiche;
- 17: Innenraum;
- 18: Vorsprung;
- 19: Arretierung;
- 20: Leitungen;
- 21: Sockel;
- 22: Schutzrohr;
- 23: thermisches Durchflussmessgerät,
- 24: Anbindungsstelle;

- 31: thermisches Durchflussmessgerät;
- 32: Sensorelement;
- 33: Sensorelement;
- 34: O-Ring;
- 35: Wandung;
- 36: Dünnschichtsensor;
- 37: Steuereinheit;
- 38: Anzeigeeinheit;

- S0: Gesamtbreite des Dünnschichtsensors;
- S1: Breite des ersten oberen Plattensegments;
- S2: Breite des zweiten oberen Plattensegments;
- S3: Spaltbreite;
- L1: Gesamtlänge des Dünnschichtsensors;
- L2: Spalttiefe;

- t₀: Intervallpausen;
- t₁: Heizintervall;

- tₛₜₐᵣₜ: Vorheizzeit;
- t_{Mess}: Messzeit;
- t_{End}: Abkühlzeit.

## Patentansprüche

1. Thermisches Durchflussmessgerät zur Bestimmung und/oder Überwachung eines thermischen Massedurchflusses eines Messmediums durch ein Messrohr mit einem Dünnschichtsensor (1), welcher Dünnschichtsensor (1) umfasst: zumindest eine erste Substratschicht (2) aus elektrisch nicht-leitendem Material, eine Widerstandsschicht (3) aus elektrisch leitenden Material und einer Deckschicht (4) zum Schutz der Widerstandsschicht vor Abrasionen, wobei die Widerstandsschicht (3) zwei Sensorelemente (5, 6) umfasst, wobei zumindest ein erstes der beiden Sensorelemente (5) ausbildet ist zum Einbringen einer Wärmemenge Q1 in ein Medium und zumindest ein zweites der beiden Sensorelemente (6) ausgebildet ist zur Ermittlung der Temperatur des Mediums und der Dünnschichtsensor (1) einen Spalt (11) aufweist, zur thermischen Isolation der beiden Sensorelemente (5, 6) voneinander, **dadurch gekennzeichnet, dass** das thermische Durchflussmessgerät ein Energiespeicherelement und eine Steuer- und/oder Regeleinheit (37) aufweist, zur getakteten Energieversorgung des ersten beheizbaren Sensorelements (5), derart, dass durch den Dünnschichtsensor (1)
i) eine Wärmemenge intervallartig in das Messmedium eingebracht wird mit Intervallpausen t0 in welchen keine Wärmemenge in das Medium eingebracht wird und Heizintervallen t1 in welchen Wärmemengen in das Medium eingebracht werden, und wobei
ii) die Intervallpausen t0 länger andauern als die Heizintervalle t1.

2. Thermisches Durchflussmessgerät nach Anspruch 1, **dadurch gekennzeichnet, dass** die Deckschicht (4) zum Schutz der Widerstandsschicht (3) des Dünnschichtsensors (1) eine Schichtdicke zwischen 0,1 µm-20 µm aufweist.

3. Thermisches Durchflussmessgerät nach Anspruch 1 oder 2, **dadurch gekennzeichnet, dass** der Spalt (11) des Dünnschichtsensors (1) eine Spaltbreite (S3) von zumindest 50 µm bis 500 µm (1%, insbesondere zumindest 5%) der Gesamtbreite des Dünnschichtsensors 1 aufweist.

4. Thermisches Durchflussmessgerät nach einem der vorhergehenden Ansprüche, **dadurch gekennzeichnet, dass** die Spalttiefe (L2) des Spaltes (11) des Dünnschichtsensors (1) zwischen 70% und weniger als 120% der Gesamtlänge eines Sensorelements (5 oder 6), jedoch weniger als 90%, vorzugsweise weniger als 80%, der Gesamtlänge (L1) des Dünnschichtsensors (1), insbesondere der Gesamtlänge des Substratschicht (2), beträgt.

5. Thermisches Durchflussmessgerät nach einem der vorhergehenden Ansprüche, **dadurch gekennzeichnet, dass** die Sensorelemente (5, 6) des Dünnschichtsensors (1) Trimmschleifen aufweisen zum Trimmen des Widerstandswertes.

6. Thermisches Durchflussmessgerät nach einem der vorhergehenden Ansprüche, **dadurch gekennzeichnet, dass** der Dünnschichtsensor (1) eine im Wesentlichen spiegelsymmetrische Form aufweist, wobei die Spiegelebene entlang einer Mittelachse des Spaltes (11) verläuft

7. Thermisches Durchflussmessgerät nach einem der Ansprüche 1-6, **dadurch gekennzeichnet, dass** der Dünnschichtsensor (1) in einem Sockel (21), vorzugsweise einem keramischen Sockel, zur Anordnung an oder in einem Gehäuse (22) eines thermischen Durchflussmessgerätes (23), eingefasst ist.

8. Thermisches Durchflussmessgerät nach Anspruch 7, **dadurch gekennzeichnet, dass** zwischen dem Sockel (21) und dem Dünnschichtsensor (1) eine Verbindungsschicht, vorzugsweise aus Temperaturschmelzglas, angeordnet ist.

9. Thermisches Durchflussmessgerät nach einem der Ansprüche 7 oder 8, **dadurch gekennzeichnet, dass** in den Sockel (21) Leitungen (20) integriert sind zur Versorgung des Dünnschichtsensors (1) mit Energie und/oder zur Signalübertragung von durch den Dünnschichtsensor (1) gemessenen Werte.

10. Thermisches Durchflussmessgerät nach einem der vorhergehenden Ansprüche, **dadurch gekennzeichnet, dass** zwischen dem Sockel (21) und dem Gehäuse (22) eine Anbindungsschicht (24) zur dichten Verbindung zwischen dem Sockel (21) und dem Gehäuse (22) angeordnet ist.

11. Thermisches Durchflussmessgerät nach einem der vorhergehenden Ansprüche, **dadurch gekennzeichnet, dass** der Sockel (21) in einer lösbaren Axialarretierung einem Gehäuse (22) des angeordnet ist.

12. Thermisches Durchflussmessgerät nach einem der Ansprüche 1-9, **dadurch gekennzeichnet, dass** das thermische Durchflussmessgerät als Zweileiter-Messgerät ausgestaltet ist.

13. Verfahren zur Bestimmung und/oder Überwachung eines Massedurchflusses eines Messmediums durch ein Messrohr mit einem thermischen Durchflussmessgerät, nach einem der Ansprüche 1-6, wobei das Energiespeicherelement eingespeiste Energie speichert und ein Energiebetrag über ein Zeitfenster an das erste Sensorelement (5) abgibt, und wobei der abgegebene Energiebetrag größer ist als der Betrag der in diesem Zeitfenster eingespeisten Energie.

## Claims

1. Thermal flowmeter designed to determine and/or monitor a thermal mass flow of a medium under measurement through a measuring tube with a thin-film sensor (1), said thin-film sensor (1) comprising: at least a first substrate layer (2) made from non-electrically conductive material, a resistance layer (3) made from electrically conductive material and a cover layer (4) designed to protect the resistance layer from abrasion, wherein the resistance layer (3) comprises two sensor elements (5, 6), wherein at least a first of the two sensor elements (5) is designed to introduce a quantity of heat Q1 into a medium and at least a second of the two sensor elements (6) is designed to determine the temperature of the medium, and the thin-film sensor (6) has a gap (11) to thermally isolate the two sensor elements (5, 6) from one another, **characterized in that** the thermal flowmeter has an energy storage element and a control and/or regulation unit (37) designed to supply energy in a clocked manner to the first heatable sensor element (5) in such a way that by means of the thin-film sensor (1)
i) a quantity of heat is introduced at intervals into the medium under measurement with breaks t0 in which no quantity of heat is introduced into the medium and heating intervals t1 in which quantities of heat are introduced into the medium, and wherein
ii) the breaks t0 last longer than the heating intervals t1.

2. Thermal flowmeter as claimed in Claim 1, **characterized in that** the cover layer (4) designed to protect the resistance layer (3) of the thin-film sensor (1) has a layer thickness between 0.1 µm and 20 µm.

3. Thermal flowmeter as claimed in Claim 1 or 2, **characterized in that** the gap (11) of the thin-film sensor (1) has a width (S3) of at least 50 µm to 500 µm (1 %, particularly at least 5%) of the total width of the thin-film sensor (1).

4. Thermal flowmeter as claimed in one of the previous claims, **characterized in that** the depth (L2) of the gap (11) of the thin-film sensor (1) is between 70% and less than 120% of the total length of a sensor element (5 or 6), but less than 90%, preferably less than 80%, of the total length (L1) of the thin-film sensor (1), particularly of the total length of the substrate layer (2).

5. Thermal flowmeter as claimed in one of the previous claims, **characterized in that** the sensor elements (5, 6) of the thin-film sensor (1) have trim loops designed to trim the resistance value.

6. Thermal flowmeter as claimed in one of the previous claims, **characterized in that** the shape of the thin-film sensor (1) is essentially mirror symmetric, wherein the mirror plane extends along a centre axis of the gap (11).

7. Thermal flowmeter as claimed in one of the Claims 1-6, **characterized in that** the thin-film sensor (1) is incorporated in a base (21), preferably a ceramic base, for arranging on or in a housing (22) of a thermal flowmeter (23).

8. Thermal flowmeter as claimed in Claim 7, **characterized in that** a connection layer, particularly made from hot-melt glass, is arranged between the base (21) and the thin-film sensor (1).

9. Thermal flowmeter as claimed in one of the Claims 7 or 8, **characterized in that** wires (20) are integrated in the base (21) for supplying energy to the thin-film sensor (1) and/or for the signal transmission of values measured by the thin-film sensor (1).

10. Thermal flowmeter as claimed in one of the previous claims, **characterized in that** a connecting layer (24) is arranged between the base (21) and the housing (22) for a tight connection between the base (21) and the housing (22).

11. Thermal flowmeter as claimed in one of the previous claims, **characterized in that** the base (21) is arranged in a releasable axial lock on or in a housing (22) of the thermal flowmeter.

12. Thermal flowmeter as claimed in one of the Claims 1 to 9, **characterized in that** the thermal flowmeter is designed as a two-wire measuring device.

13. Procedure for determining and/or monitoring a mass flow of a medium under measurement through a measuring tube with a thermal flowmeter, as claimed in one of the Claims 1 to 6, wherein the energy storage element stores energy that is fed in and releases an amount of energy to the first sensor element (5) over a period of time, and wherein the amount of energy released is greater than the amount of energy fed in during this period of time.

## Revendications

1. Débitmètre thermique destiné à la détermination et/ou à la surveillance d'un débit massique thermique d'un produit mesuré à travers un tube de mesure avec un capteur à couche mince (1), lequel capteur à couche mince (1) comprend : au moins une première couche de substrat (2) constituée d'un matériau électriquement non conducteur, une couche résistive (3) constituée d'un matériau électriquement conducteur et une couche de recouvrement (4) destinée à la protection de la couche résistive contre les abrasions, la couche résistive (3) comprenant deux éléments capteur (5, 6), au moins un premier des deux éléments capteur (5) étant conçu pour l'introduction d'une quantité de chaleur Q1 dans un produit et au moins un deuxième des deux éléments capteur (6) étant conçu pour la détermination de la température du produit et le capteur à couche mince (6) présentant une fente (11) en guise d'isolation thermique entre les deux éléments capteur (5, 6), **caractérisé en ce que** le débitmètre thermique comporte un élément d'accumulation d'énergie et une unité de commande et/ou de régulation (37) destinée à l'alimentation en énergie à découpage du premier élément capteur chauffé (5), de telle sorte qu'à travers le capteur à couche mince (1)
i) une quantité de chaleur est introduite par intervalles dans le produit mesuré, avec des pauses d'intervalle t0 au cours desquelles aucune quantité de chaleur n'est introduite dans le produit et des intervalles de chauffage t1 au cours desquels des quantités de chaleur sont introduites dans le produit, et où
ii) les pauses d'intervalle t0 durent plus longtemps que les intervalles de chauffage t1.

2. Débitmètre thermique selon la revendication 1, **caractérisé en ce que** la couche de recouvrement (4) destinée à la protection de la couche résistive (3) du capteur à couche mince (1) présente une épaisseur comprise entre 0,1 µm et 20 µm.

3. Débitmètre thermique selon la revendication 1 ou 2, **caractérisé en ce que** la fente (11) du capteur à couche mince (1) présente une largeur (S3) d'au moins 50 µm à 500 µm (1 %, notamment au moins 5 %) de la largeur totale du capteur à couche mince (1).

4. Débitmètre thermique selon l'une des revendications précédentes, **caractérisé en ce que** la profondeur (L2) de la fente (11) du capteur à couche mince (1) est comprise entre 70 % et moins de 120 % de la longueur totale d'un élément capteur (5 ou 6), cependant moins de 90 %, de préférence moins de 80 % de la longueur totale (L1) du capteur à couche mince (1), notamment de la longueur totale de la couche de substrat (2).

5. Débitmètre thermique selon l'une des revendications précédentes, **caractérisé en ce que** les éléments capteurs (5, 6) du capteur à couche mince (1) présentent des boucles de réglage destinées au réglage de la valeur de résistance.

6. Débitmètre thermique selon l'une des revendications précédentes, **caractérisé en ce que** le capteur à couche mince (1) présente une forme pour l'essentiel en symétrie miroir, le plan du miroir s'étendant le long d'un axe médian de la fente (11).

7. Débitmètre thermique selon l'une des revendications 1 à 6, **caractérisé en ce que** le capteur à couche mince (1) est incorporé dans un socle (21), de préférence un socle en céramique, pour la disposition sur ou dans un boîtier (22) d'un débitmètre thermique (23).

8. Débitmètre thermique selon la revendication 7, **caractérisé en ce qu'**est disposée, entre le socle (21) et le capteur à couche mince (1), une couche de liaison, de préférence en verre thermofusible.

9. Débitmètre thermique selon l'une des revendications 7 ou 8, **caractérisé en ce que** sont intégrés dans le socle (21) des fils (20) destinés à l'alimentation du capteur à couche mince (1) en énergie et/ou à la transmission de signal des valeurs mesurées par le capteur à couche mince (1).

10. Débitmètre thermique selon l'une des revendications précédentes, **caractérisé en ce qu'**est disposée entre le socle (21) et le boîtier (22) une couche de liaison (24) en vue d'une liaison étanche entre le socle (21) et le boîtier (22).

11. Débitmètre thermique selon l'une des revendications précédentes, **caractérisé en ce que** le socle (21) est disposé dans un dispositif d'arrêt axial amovible sur ou dans un boîtier (22) du débitmètre thermique.

12. Débitmètre thermique selon l'une des revendications 1 à 9, **caractérisé en ce que** le débitmètre thermique est équipé en tant qu'appareil à deux fils.

13. Procédé destiné à la détermination et/ou à la surveillance d'un débit massique d'un produit mesuré à travers un tube de mesure à l'aide d'un débitmètre thermique, selon l'une des revendications 1 à 6, l'élément d'accumulation accumulant l'énergie fournie et libérant une quantité d'énergie sur une fenêtre de temps au premier élément capteur (5), et la quantité d'énergie libérée étant supérieure à la quantité de l'énergie fournie dans cette fenêtre de temps.
